(19) Europäisches Patentamt
European Patent Office
Office européen des brevets

(11) Publication number: 0 031 996 B1

(12) EUROPEAN PATENT SPECIFICATION

(45) Date of publication of patent specification: 26.01.83

(51) Int. Cl.[3]: C 07 F 7/10, C 07 F 7/18

(21) Application number: 80304205.0

(22) Date of filing: 24.11.80

# (54) Hydantoinylsilanes and bis(hydantoinyl)disiloxanes and method for preparing same.

(30) Priority: 28.11.79 US 97902

(43) Date of publication of application: 15.07.81 Bulletin 81/28

(45) Publication of the grant of the patent: 26.01.83 Bulletin 83/4

(84) Designated Contracting States: CH DE FR GB IT LI NL

(56) References cited:
DE - A - 1 772 315
GB - A - 1 509 691
US - A - 3 209 053
US - A - 3 517 001
US - A - 3 586 699

(73) Proprietor: M & T Chemicals, Inc.
Rahway, New Jersey 07065 (US)

(72) Inventor: Berger, Abe
11 Malvern Drive
Summit New Jersey 07901 (US)

(74) Representative: Ellis, John Clifford Holgate et al,
MEWBURN ELLIS & CO. 2/3 Cursitor Street
London EC4A 1BQ (GB)

EP 0 031 996 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Hydantoinylsilanes and bis(hydantoinyl)disiloxanes and method for preparing same

This invention relates to a novel class of organosilanes and disiloxanes. The characteristic feature of these silanes and disiloxanes is the presence of a hydantoin residue that is bonded to silicon through an alkylene group.

Prior art organosilane compounds which have non-aromatic nitrogen heterocycle residues bonded to silicon through an alkylene group are described in US—A—3517001, US—A—3209053, US—A—3586699 and DE—A—1772315. Organosilane compounds having hydantoin residues bonded to silicon through the ring nitrogen atoms are known from GB—A—1509691 as silylating agents for the preparation of pharmaceutical products.

According to one aspect of the invention there is provided a hydantoinyl silane having the general formula

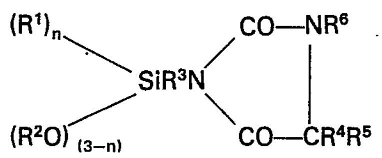

(I)

wherein

$R^1$ is alkyl, aryl, cyanoalkyl, trifluoropropyl, alkenyl, alkynyl or halophenyl;

$R^2$ is alkyl, alkaryl or cycloalkyl;

$R^3$ is alkylene;

$R^4$ and $R^5$ are independently chosen from hydrogen, alkyl, aryl, aralkyl and alkaryl;

$R^6$ is hydrogen, alkyl, aryl, aralkyl, alkaryl or a group having the general formula

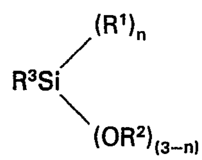

(II)

wherein $R^1$, $R^2$ and $R^3$ are as defined above and n for both formulae (I) and (II) is 0, 1, 2 or 3 with the proviso that for either of formulae (I) and (II) any alkyl or alkylene group contains from 1 to 12 carbon atoms and any alkenyl or alkynyl group contains from 2 to 12 carbon atoms.

A method for preparing a hydantoinyl silane having the general formula (I) as defined above comprises:

1) reacting substantially equimolar amounts of (a) an anhydrous alkali metal salt of a hydantoin having the general formula

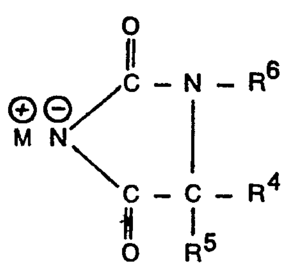

(III)

wherein M is an alkali metal and $R^4$, $R^5$ and $R^6$ are as defined in formula (I) and

(b) a haloalkylsilane having the general formula

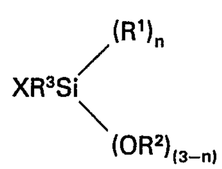

(IV)

wherein X is halogen and $R^1$, $R^2$, $R^3$ and *n* are as defined in formula (I) in a reaction medium comprising a dipolar aprotic liquid;

2) maintaining the reaction mixture of (a) and (b) at a temperature of from ambient to the boiling point of the mixture for sufficient time to substantially complete the reaction, and

3) isolating the resultant hydantoinyl silane from the reaction mixture.

According to another aspect of the invention there is provided a bis(hydantoinyl)disiloxane having the general formula

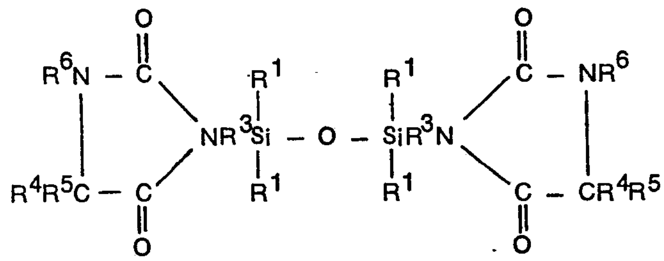
(V)

wherein $R^1$, $R^3$, $R^4$, $R^5$ and $R^6$ are as defined in formula (I) and with the proviso that for either of formulae (V) and (II) any alkyl or alkylene group contains from 1 to 12 carbon atoms and any alkenyl or alkynyl group contains from 2 to 12 carbon atoms.

Particularly preferred compounds are those of general formulae (I) and (V) in which $R^1$ (if present) is alkyl, more especially methyl, and $R^2$ (if present) is alkyl, more especially methyl. Of the possible meanings of $R^4$ and $R^5$, hydrogen and alkyl may be particularly mentioned, and again the preferred alkyl radical is methyl. $R^6$ may suitably be hydrogen or a group having the general formula (II) and $R^3$ may suitably be trimethylene.

The novel silanes of this invention can be prepared using conventional procedures employed for reacting halosilanes with compounds containing a labile proton. A preferred method involves the reaction of an anhydrous alkali metal salt of hydantoin or one of the substituted hydantoins represented by the general formula

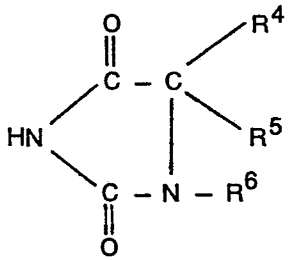

wherein $R^4$, $R^5$ and $R^6$ are as defined above with a haloalkylsilane represented by the general formula (IV) wherein $R^1$, $R^2$, $R^3$ and n are as defined above and X represents chlorine, bromine or iodine. This reaction is preferably conducted in the presence of a dipolar aprotic organic liquid medium which is a solvent for the aforementioned alkali metal salt of the hydantoin. Especially suitable dipolar aprotic liquids include N,N-dimethylformamide, N-methylpyrrolidone and dimethylsulphoxide.

Since the reaction between the hydantoin salt and the haloalkyl silane may be exothermic, it is preferable to first dissolve the hydantoin salt in the liquid reaction medium and gradually add the haloalkylsilane to the resultant solution under an inert atmosphere such as nitrogen to exclude even trace amounts of water, which would rapidly hydrolyze the alkoxy groups present on the haloalkylsilane. It is often desirable to heat the reaction mixture at temperatures of from 40 to about 100°C for from 0.5 to 5 hours or longer to ensure that the reaction is complete. The reaction product is often soluble in the reaction medium, in which instance the product is readily isolated by filtering to remove the solid alkali metal halide byproduct and distilling the dipolar aprotic liquid under reduced pressure to minimize heat-induced decomposition of the desired product.

The product of the aforementioned reaction contains one silicon atom and one hydantoin residue that is bonded to silicon through an alkylene group represented by $R^3$ in the foregoing formula (I). Compounds containing three hydrocarbyl groups and one hydrocarbyloxy group bonded to silicon are readily converted to the corresponding bis(hydantoinylalkyl)tetrahydrocarbyldisiloxane (formula (V)) by hydrolysis in the presence of a methanol-water or ethanol-water mixture containing a trace amount of an alkali metal hydroxide such as potassium hydroxide.

The hydantoin employed to prepare the compounds ((I) and (V)) of this invention can be unsubstituted, in which instance the substituents represented by $R^4$, $R^5$ and $R^6$ in the foregoing formulae are hydrogen. Alternatively, one can employ any of the available substituted hydantoins or a compound containing the desired substituents can be prepared using synthetic procedures and reactions disclosed in the chemical literature. Representative substituted hydantoins which are commercially available or have been reported in the chemical literature include

5,5-dimethylhydantoin
5,5-diphenylhydantoin
5-ethyl-5-(2-methylbutyl)hydantoin
5-phenylhydantoin.

The synthesis of hydantoin, also referred to as 2,4-diketoiminazolidine, and a number of substituted hydantoins, is described in a text entitled "Chemistry of Carbon Compounds" edited by E.H. Rodd (Elsiner Publishing Company, 1957) and in an article by E. Ware [Chemical Reviews *46*, 403—470 (1950)].

The following examples describe the preparation of four preferred species selected from the present class of novel silanes and disiloxanes. These examples should not be considered as limiting the scope of the accompanying claims.

## Example 1

Preparation of 5,5-dimethyl-3-trimethoxysilylpropyl Hydantoin.

A mixture containing 12.8 g (0.1 mole) 5,5-dimethyl-hydantoin, 5.6 g (0.1 mole) potassium hydroxide and 100 cc ethanol was heated to the boiling point until a clear solution was obtained. The ethanol was then evaporated under reduced pressure to isolate the solid, anhydrous salt. The salt was combined with 100 cc of dry N,N-dimethylformamide and the resultant mixture was heated at 50°C until a clear solution formed. A 19.8 g (0.1 mole) portion of chloropropyl trimethoxysilane was then added dropwise to the aforementioned salt solution under a nitrogen atmosphere with stirring. The temperature of the reaction mixture increased slightly during the addition, which is indicative of an exothermic reaction, and a white precipitate (potassium chloride) began to form when the silane addition was begun. Following completion of the addition the reaction mixture was heated at 95°C for three hours. Analysis by vapour phase chromatography of the liquid phase demonstrated that the initial chloropropyl trimethoxysilane had been converted to a product exhibiting a high retention time. The reaction mixture was then cooled and filtered, following which the liquid phase was distilled to remove the N,N-dimethylformamide. A second fraction was collected at a temperature of 194°C and a pressure of 4 mm of mercury and subsequently solidified to a white solid. Analysis by vapour phase chromatography indicated that this material was 09% pure and contained a trace amount of the initial hydantoin. The infrared spectrum of the material was consistent with the proposed structure.

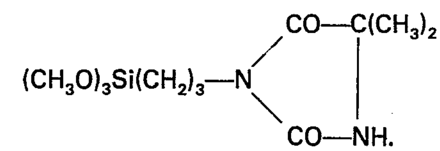

The product was found to contain 9.74% by weight of silicon and 9.92% nitrogen. The calculated values for the expected product are 9.64% silicon and 9.66% nitrogen.

## Example 2

Preparation of 3-Dimethoxymethylsilylpropylhydantoin.

A mixture containing 10.0 g (0.1 mole) hydantoin, 5.6 g (0.1 mole) potassium hydroxide and 100 cc ethanol was heated to the boiling point until a clear solution was obtained. The resultant salt was then isolated and dried as described in the preceding example, following which it was solubilized in 100 cc of anhydrous N,N-dimethylformamide and reacted with 18.2 g of chloropropylmethyldimethoxysilane under a nitrogen atmosphere using dropwise addition. The reaction mixture was heated at 110°C for about sixteen hours following completion of the silane addition. The reaction mixture was then cooled and filtered to remove the potassium chloride byproduct. Analysis of the liquid phase by vapour phase chromatography demonstrated that the original silane had been consumed and replaced by a material having a significantly longer retention time. The desired product was recovered following distillation to remove the N,N-dimethylformamide.

## Example 3

3-Preparation of Bis[(5,5-dimethylhydantoin-3-yl)-propyl] tetramethyldisiloxane.

A sample of 5,5-dimethyl-3-dimethylmethoxysilylpropylhydantoin was prepared and isolated using the general procedure described in the preceding examples with 0.1 mole of each of the three reagents, namely 5,5-dimethylhydantoin, 3-chloropropyldimethylmethoxysilane and potassium hydroxide. A 24.4 g portion of the final product was dissolved in a mixture of 5.4 g of water and 300 cc methanol containing one pellet of potassium hydroxide. The resultant mixture was stirred at ambient temperature for 16 hours, at which time the methanol-water mixture was removed by distillation under reduced pressure. The identity of the final product as a disiloxane was confirmed by its infra-red spectrum and by vapour phase chromatography.

Example 4

Preparation of 1,3-Bis(trimethoxysilylpropyl)-5,5-dimethylhydantoin.

A 2.4 g portion of a dispersion containing 50% by weight of sodium hydride in a liquid paraffin was added in portions under an inert atmosphere to a solution containing 14.5 g (0.05 mole), 5,5-dimethyl-3-trimethoxysilylpropyl hydantoin and 150 cc of anhydrous N,N-dimethylformamide. The temperature of the reaction mixture was maintained at from 15 to 20°C during the addition of the hydride. Following completion of the addition the mixture was stirred until hydrogen evolution ceased, at which time it was heated to 85°C, and 98.8 g of chloropropyltrimethoxysilane were added dropwise to the reaction mixture. A white precipitate formed as the addition progressed. Following completion of the addition the reaction mixture was heated at 95°C for 16 hours, at which time the reaction mixture was cooled, filtered and the liquid phase distilled under reduced pressure to remove the N,N-dimethylformamide. The liquid paraffin was washed from the product using hexane. The identity of the residue as the expected silylhydantoin was confirmed using infra-red and nuclear magnetic resonance spectroscopy.

The silanes and disiloxanes of this invention are particularly useful as coupling agents for bonding glass fibres to organic resins and as self-bonding adhesion promoters for room temperature curable silicone adhesives. Some prior art room temperature curable polysiloxane products employing an acetoxysilane as the curing agent require a primer to achieve adequate adhesion with the substrate to which they are applied. Primers are not required using the hydantoinyl silanes of this invention.

**Claims**

1. A hydantoinyl silane having the general formula

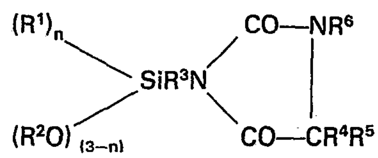

(I)

wherein

$R^1$ is alkyl, aryl, cyanoalkyl, trifluoropropyl, alkenyl, alkynyl or halophenyl;

$R^2$ is alkyl, alkaryl or cycloalkyl;

$R^3$ is alkylene;

$R^4$ and $R^5$ are independently chosen from hydrogen, alkyl, aryl, aralkyl and alkaryl;

$R^6$ is hydrogen alkyl, aryl, aralkyl, alkaryl or a group having the general formula

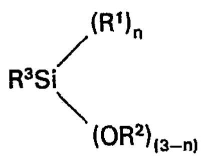

(II)

wherein $R^1$, $R^2$ and $R^3$ are as defined above and n for both formulae (I) and (II) is 0, 1, 2 or 3 with the proviso that for either of formulae (I) and (II) any alkyl or alkylene group contains from 1 to 12 carbon atoms and any alkenyl or alkynyl group contains from 2 to 12 carbon atoms.

2. A bis(hydantoinyl)disiloxane having the general formula

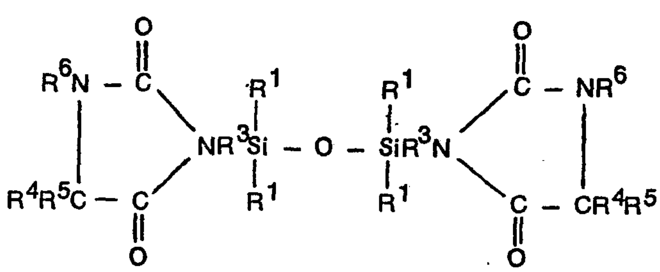

(V)

wherein $R^1$, $R^3$, $R^4$, $R^5$ and $R^6$ are as defined in formula (I) of claim 1 and with the proviso that for either of formulae (V) and (II) any alkyl or alkylene group contains from 1 to 12 carbon atoms and any alkenyl or alkynyl group contains from 2 to 12 carbon atoms.

3. A compound according to either of the preceding claims, wherein $R^1$ if present is alkyl $R^2$ if present is alkyl.

4. A compound according to Claim 3, wherein the said alkyl is methyl.

5. A compound according to any of the preceding claims, in which $R^4$ and $R^5$ are each hydrogen or alkyl.

6. A compound according to Claim 5, in which $R^4$ and $R^5$ are both methyl.

7. A compound according to any one of the preceding claims, in which $R^6$ is hydrogen or a group having the general formula (II) as defined in Claim 1.

8. A compound according to any one of the preceding claims, in which $R^3$ is $-(CH_2)_3-$.

9. A method for preparing a hydantoinyl silane having the general formula (I) as defined in Claim 1, the method comprising:

1) reacting substantially equimolar amounts of (a) an anhydrous alkali metal salt of a hydantoin having the general formula

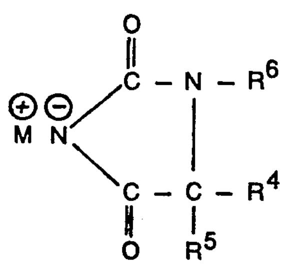

(III)

wherein M is an alkali metal and $R^4$, $R^5$ and $R^6$ are as defined in formula (I) and (b) a haloalkylsilane having the general formula

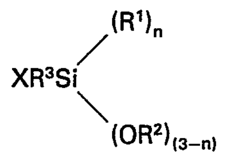

(IV)

wherein X is halogen and $R^1$, $R^2$, $R^3$ and n are as defined in formula (I) in a reaction medium comprising a dipolar aprotic liquid;

2) maintaining the reaction mixture of (a) + (b) at a temperature of from ambient to the boiling point of the mixture for sufficient time to substantially complete the reaction, and

3) isolating the resultant hydantoinyl silane from the reaction mixture.

10. A method according to Claim 9, wherein M is potassium.

**Revendications**

1. Hydantoïnyl silane ayant pour formule générale

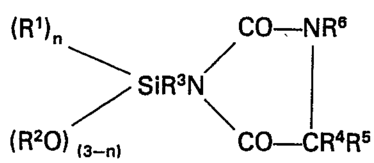

(I)

où

$R^1$ est alcoyle, aryle, cyanoalcoyle, trifluoropropyle, alkényle, alkynyle ou halophényle;

$R^2$ est alcoyle, alkaryle ou cycloalcoyle;

$R^3$ est alcoylène;

$R^4$ et $R^5$ sont indépendamment choisis parmi l'hydrogène, un alcoyle, un aryle, un aralcoyle et un alkaryle;

$R^6$ est de l'hydrogène, un alcoyle, un aryle, un aralcoyle, un alkaryle ou un groupe ayant pour formule générale

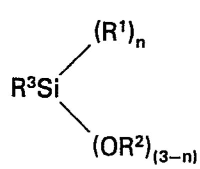

(II)

où $R^1$, $R^2$ et $R^3$ sont tels que définis ci-dessus et *n* pour les deux formules (I) et (II) est 0, 1, 2 ou 3 à condition que pour chacune des formules (I) et (II), tout groupe alcoyle ou alcoylène contienne de 1 à 12 atomes de carbone et tout groupe alkényle ou alkynyle contienne de 2 à 12 atomes de carbone.

2. Bis(hydantoïnyl)disiloxane ayant pour formule générale

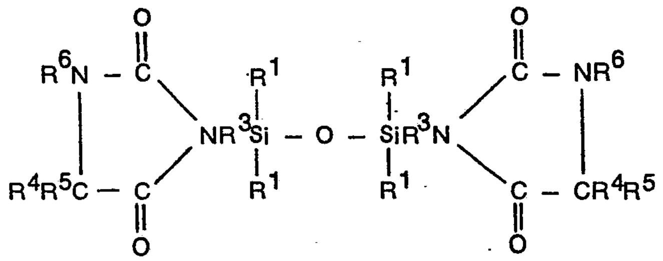

(V)

où $R^1$, $R^3$, $R^4$, $R^5$ et $R^6$ sont tels que définis à la formule (I) de la revendication 1 et à condition que pour chacune des formules (V) et (II), tout groupe alcoyle ou alcoylène contienne de 1 à 12 atomes de carbone et tout groupe alkényle ou alkynyle contienne de 2 à 12 atomes de carbone.

3. Composé selon l'une des revendications précédentes, où $R^1$, s'il est présent, est un alcoyle, $R^2$, s'il est présent, est un alcoyle.

4. Composé selon la revendication 3, où ledit alcoyle est du méthyle.

5. Composé selon l'une des revendications précédentes, où $R^4$ et $R^5$ sont chacun de l'hydrogène ou un alcoyle.

6. Composé selon la revendication 5, où $R^4$ et $R^5$ sont tous deux du méthyle.

7. Composé selon l'une des revendications précédentes, où $R^6$ est de l'hydrogène ou un groupe ayant la formule générale (II) telle que définie à la revendication 1.

8. Composé selon l'une des revendications précédentes, où $R^3$ est $-(CH_2)_3-$.

9. Procédé de préparation d'un hydantoïnyl silane ayant la formule générale (I) selon la revendication 1, le procédé consistant à:

1) faire réagir des quantités sensiblement équimolaires de (a) un sel anhydre d'un métal alcalin d'une hydantoïne ayant pour formule générale

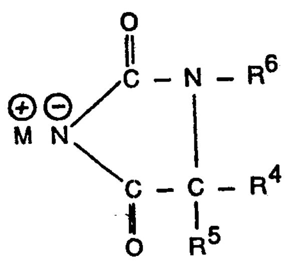

(III)

où M est un métal alcalin et $R^4$, $R^5$ et $R^6$ sont tels que définis à la formule (I) et (b) un haloalkylsilane ayant pour formule générale

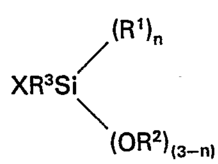

(IV)

où X est halogène et $R^1$, $R^2$, $R^3$ et *n* sont tels que définis à la formule (I), dans un milieu réactionnel comprenant un liquide aprotique dipolaire;

2) maintenir le mélange réactionnel de (a) + (b) à une température comprise entre la température ambiante et le point d'ébullition du mélange pendant suffisamment de temps pour accomplir sensiblement la réaction, et

3) isoler l'hydantoïnyl silane résultant, du mélange réactionnel.

10. Procédé selon la revendication 9, où M est du potassium.

**Patentansprüche**

1. Hydantoinylsilan der allgemeinen Formel

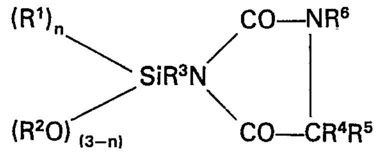

(I)

worin

$R^1$ Alkyl, Aryl, Cyanoalkyl, Trifluorpropyl, Alkenyl, Alkinyl oder Halogenphenyl,
$R^2$ Alkyl, Alkaryl oder Cycloalkyl,
$R^3$ Alkylen ist,
$R^4$ und $R^5$ unabhängig ausgewählt sind unter Wasserstoff, Alkyl, Aryl, Aralkyl und Alkaryl,
$R^6$ Wasserstoff, Alkyl, Aryl, Aralkyl, Alkaryl oder eine Gruppe der allgemeinen Formel

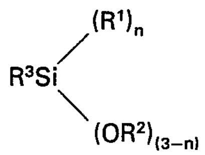

(II)

ist, worin $R^1$, $R^2$ und $R^3$ wie oben definiert sind und n für beide Formeln (I) und (II) 0, 1, 2 oder 3 ist, mit der Maßgebe, daß für jede der Formeln (I) und (II) jede Alkyl- oder Alkylengruppe 1 bis 12 Kohlenstoffatome und jede Alkenyl- oder Alkinyl-Gruppe 2 bis 12 Kohlenstoffatome enthält.

2. Bis(hydantoinyl)disiloxan der allgemeinen Formel

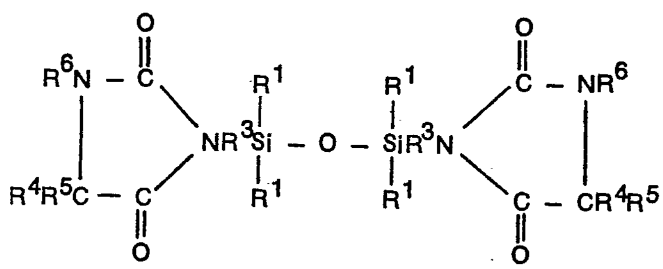

(V)

worin $R^1$, $R^3$, $R^4$, $R^5$ und $R^6$ wie in Formel (I) des Anspruchs 1 definiert sind, und mit der Maßgabe, daß für jede der Formeln (V) und (II) jede Alkyl- oder Alkylengruppe 1 bis 12 Kohlenstoffatome und jede Alkenyl- oder Alkinyl-Gruppe 2 bis 12 Kohlenstoffatome enthält.

3. Verbindung nach einem der vorhergehenden Ansprüche, worin $R^1$, wenn vorhanden, Alkyl, $R^2$, wenn vorhanden, Alkyl ist.

4. Verbindung nach Anspruch 3, worin das Alkyl Methyl ist.

5. Verbindung nach einem der vorhergehenden Ansprüche, worin $R^4$ und $R^5$ jeweils Wasserstoff oder Alkyl sind.

6. Verbindung nach Anspruch 5, worin $R^4$ und $R^5$ beide Methyl sind.

7. Verbindung nach einem der vorhergehenden Ansprüche, worin $R^6$ Wasserstoff oder eine Gruppe der allgemeinen Formel (II), wie in Anspruch 1 definiert, ist.

8. Verbindung nach einem der vorhergehenden Ansprüche, worin $R^3$ $-(CH_2)_3-$ ist.

9. Verfahren zur Herstellung eines Hydantoinylsilans der allgemeinen Formel (I), wie in Anspruch 1 definiert, umfassend

1) die Umsetzung praktisch äquimolarer Mengen (a) eines wasserfreien Alkalimetallsalzes eines Hydantoins der allgemeinen Formel

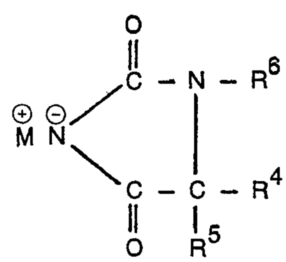

(III),

worin M ein Alkalimetall ist und $R^4$, $R^5$ und $R^6$ wie in Formel (I) definiert sind, und (b) eines Halogenalkylsilans der allgemeinen Formel

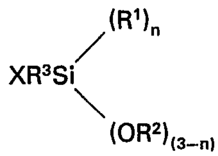

(IV)

worin X Halogen ist und $R^1$, $R^2$, $R^3$ und n wie in Formel (I) definiert sind, in einem eine dipolare aprotische Flüssigkeit umfassenden Reaktionsmedium;

2) das Halten des Reaktionsgemischs aus (a) + (b) bei einer Temperatur von Raumtemperatur bis zum Siedepunkt des Gemischs ausreichend lange für praktisch vollständige Umsetzung und

3) das Isolieren des anfallenden Hydantoinylsilans aus dem Reaktionsgemisch.

10. Verfahren nach Anspruch 9, worin M Kalium ist.